# EUROPEAN PATENT SPECIFICATION

(11) **EP 3 332 903 B1**
(45) Date of publication and mention of the grant of the patent: **11.03.2020**
(21) Application number: 16832816.9
(22) Date of filing: 25.07.2016
(51) Int. Cl.: B23K 20/12

(54) **FRICTION STIR WELDING DEVICE AND METHOD FOR CONTROLLING FRICTION STIR WELDING**
REIBRÜHRSCHWEISSVORRICHTUNG UND VERFAHREN ZUR STEUERUNG BEIM REIBRÜHRSCHWEISSEN
DISPOSITIF DE SOUDAGE PAR FRICTION-MALAXAGE ET PROCÉDÉ DE COMMANDE DE SOUDAGE PAR FRICTION-MALAXAGE

(30) Priority: 06.08.2015 JP 2015156305
(43) Date of publication of application: 13.06.2018
(73) Proprietor: Hitachi Power Solutions Co., Ltd., Hitachi-shi, Ibaraki 317-0073 (JP)
(72) Inventor: ODAKURA Tomio, Hitachi-shi Ibaraki 317-0073 (JP); ABE Hiroki, Hitachi-shi Ibaraki 317-0073 (JP); ANDO Kenji, Hitachi-shi Ibaraki 317-0073 (JP)
(74) Representative: Strehl Schübel-Hopf & Partner
(86) International application number: PCT/JP2016/071675
(87) International publication number: WO 2017/022537

(56) References cited:
- EP-A1- 2 511 038
- WO-A1-2010/019232
- WO-A1-2016/111336
- JP-A- 2004 130 326
- JP-A- 2011 115 842
- JP-A- 2011 530 412
- JP-A- 2014 079 800
- US-A1- 2005 001 009
- US-A1- 2014 027 496
- US-A1- 2014 027 496

## Description

### Technical Field

The present invention relates to a friction stir welding apparatus and a friction stir welding control method for solid-phase welding members to be welded using a plastic flow phenomenon.

### Background Art

A friction stir welding apparatus (hereinafter referred to as an FSW apparatus) that applies friction heat with a rotating welding tool, generates a plastic flow phenomenon in members to be welded, stirs with a welding tool, and welds the members to be welded is known. The FSW apparatus is used for welding metals that soften at a relatively low temperature such as aluminum, copper, iron, and alloys thereof.

In a typical FSW apparatus, welding is performed while processing conditions such as optimum specifications (material, shape, or the like) of the welding tool, a rotation number (rotation speed), a welding speed which is a feed rate, an insertion depth, and the like that are determined in advance according to the material and wall thickness of the member to be welded are set in advance and the processing conditions are maintained from a welding start point to a welding end point. Whether or not the welding is made properly is determined based on the result of confirming that there is no cavity defect in the cross section of the welded portion and that there is no groove defect formed on the surface of the welded portion. In general, it is almost not done to manage a welding temperature from a welding start point to a welding end point and consider the influence on the welding quality due to change of the welding temperature.

However, in a case where the temperature of the welded portion of the member to be welded is not managed, it is inevitable that variation of the welding temperature is generated from the welding start point to the welding end point, and as a result, variation is also generated in strength and welding quality of the welded portion. Particularly, in a case where members to be welded of dissimilar materials are welded, the influence thereof is greatly generated.

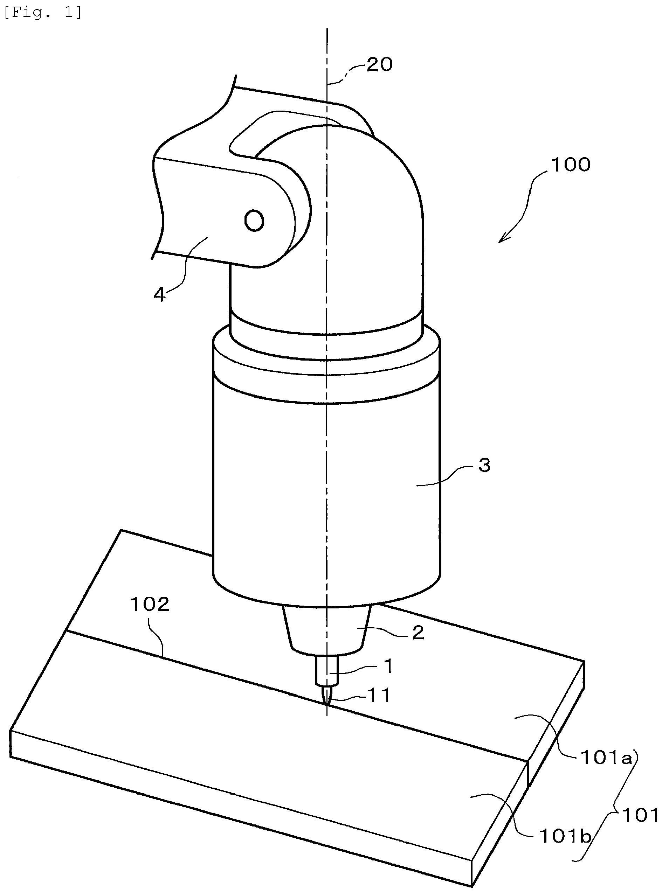

Therefore, for example, PTL 1 discloses a processing probe P (welding tool) for welding two polymerized members to be welded 1 and 2, which is eccentrically disposed with respect to a rotation shaft of a processing probe main body Pa, and has a welding pin Pb that is rotatable with respect to the processing probe main body Pa (see Fig. 1 and the like). In such a processing probe P, since the eccentrically disposed welding pin Pb rotates with respect to a center of the processing probe main body Pa, a temperature of portions in the vicinity of a bottom surface of the processing probe P, that is, boundary surfaces of the members to be welded 1 and 2 can be equalized. Further, PTL 1 discloses that temperature detection means 23 is provided in the processing probe P and rotation number of the processing probe main body Pa and the welding pin Pb are controlled based on a detection value by the temperature detection means 23 (see paragraph 0032 and the like).

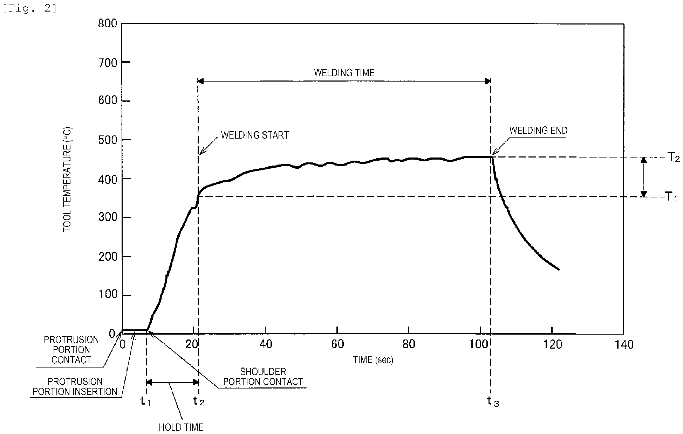

In addition, in PTL 2, an example of a friction stir welding apparatus 1 is disclosed in which a thermocouple 34 is provided on a backing member 21 that supports an object to be welded 2 provided while being abutted against a welding tool 4 of a welded portion 3 and the opposite side thereof and can monitor overheating of the welding tool 4 based on the temperature detected by the thermocouple 34 (see Fig. 2 and the like).

In addition, PTL 3 discloses an example of a friction stir welding method in which a heat input amount to a work 1 from a start portion to an end portion of welding of the work 1 to be welded is controlled to be substantially constant by changing the rotation speed or the welding speed of the welding tool (see claim 1, claim 2, Fig. 1, and the like) . According to the welding method, it is described that uniform welding quality can be obtained throughout the welded portion particularly in welding of small diameter pipe material and bar material in a peripheral direction (see paragraph 0023 and the like).

### Citation List

### Patent Literature

PTL 1: JP-A-2006-167758
PTL 2: JP-A-2011-115842 (also published as EP 2 511 038 A1)
PTL 3: Japanese Patent No. 4286962

WO 2010/019232 A1 discloses a friction stir welding apparatus with the features in the preamble of present claim 1. Further conventional examples of friction stir welding are described in US 2005/001009 A1 and US 2014/027496 A1.

### Summary of Invention

### Technical Problem

Incidentally, in the friction stir welding apparatus disclosed in PTL 1, the temperature detection means 23 is provided on an outer peripheral portion of the processing probe main body Pa (Fig. 1, paragraph 0028). In addition, in the friction stir welding apparatus disclosed in PTL 2, the thermocouple 34 which detects the temperature of the welded portion is provided in the backing member 21. In either case, the temperature sensor is provided at a position which is slightly distant from a stir target region, that is, the welded portion, of the member to be welded. Therefore, with such a temperature sensor, it is not always possible to accurately detect the temperature of the welded portion of the member to be welded. Therefore, it is not always possible to sufficiently reduce variations in the strength and the welding quality of the welded portion from the welding start point to the welding end point of the member to be welded.

In addition, in the friction stir welding method disclosed in PTL 3, the heat input amount to the welded portion is held to be constant between the start portion and the end portion of the welding. Therefore, the temperature of the welded portion is low near the start point and high near the end point of welding due to a heat storage effect in the member to be welded. Therefore, the strength and the welding quality of the welded portion between the welding start point and the welding end point of the member to be welded is unlikely to be equalized.

In view of the problems of the related art as described above, an object of the present invention is to provide a friction stir welding apparatus and a friction stir welding control method that can equalize the welding quality at welded portions of members to be welded.

### Solution to Problem

To achieve the object described above, according to the present invention, there is provided a friction stir welding apparatus (FSW apparatus) as defined in claim 1.

### Advantageous Effects of Invention

According to the invention, there is provided a friction stir welding apparatus and a friction stir welding control method that can equalize the welding quality at the welded portion of the member to be welded.

### Brief Description of Drawings

[Fig. 1] Fig. 1 is a view schematically illustrating an example of an outer appearance perspective view of an FSW apparatus according to an embodiment of the invention.
[Fig. 2] Fig. 2 is a diagram illustrating an example of transition of a tool temperature when the members to be welded are welded by the FSW apparatus under a condition of a constant heat input amount.
[Fig. 3] Fig. 3 is a diagram illustrating an example of a schematic block configuration of the FSW apparatus according to an embodiment of the invention.
[Fig. 4] Fig. 4 is an example of a longitudinal section view schematically illustrating a state where a protrusion portion of a welding tool is press-fitted into the member to be welded.
[Fig. 5] Fig. 5 is a diagram schematically illustrating a transverse cross section of the welding tool.
[Fig. 6] Fig. 6 is a diagram illustrating an example of a configuration of FSW control data stored in a storage device of a control device.
[Fig. 7] Fig. 7 is a diagram schematically illustrating an example of a method of temperature management when the member to be welded is welded by the welding tool.
[Fig. 8] Fig. 8 is a diagram illustrating an example of a processing flow of FWS welding control processing by the control device.
[Fig. 9] Fig. 9 is a view illustrating (a) an example of butt welding and (b) an example of overlay welding of members to be welded made of dissimilar materials.

### Description of Embodiments

Hereinafter, embodiments of the invention will be described in detail with reference to the drawings. In each drawing, common constituent elements are denoted by the same reference numerals and redundant description is omitted.

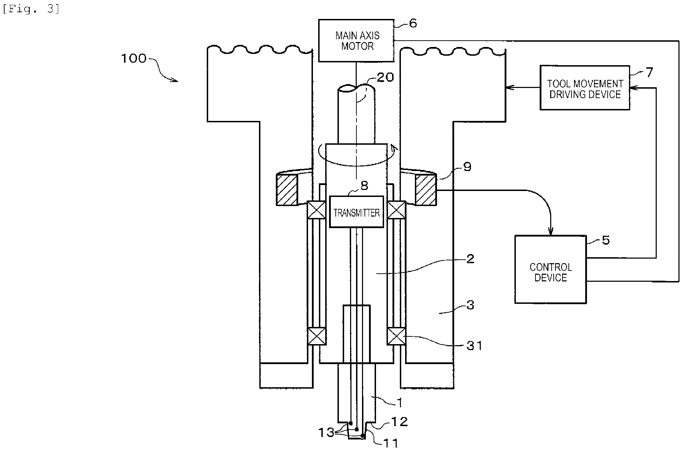

Fig. 1 is a diagram schematically illustrating an example of an outer appearance perspective view of an FSW apparatus 100 according to an embodiment of the invention. As illustrated in Fig. 1, the FSW apparatus 100 includes a welding tool 1 having a protrusion portion 11, a tool holder 2 holding the welding tool 1, a housing 3 rotatably holding the tool holder 2, and the like. Here, the housing 3 is a cylindrical container, and a main axis motor 6 (see Fig. 3) and the like which rotate a columnar tool holder 2 about a main axis 20 are housed inside the housing 3. In addition, the main axis 20 indicates a center axis of the columnar tool holder 2.

The housing 3 holding the welding tool 1 and the tool holder 2 as described above is attached to a tip portion of an arm 4 of a machining tool (not illustrated) or a multi-axis robot (not illustrated). In other words, the welding tool 1 is configured to be freely movable both in the vertical direction and in the planar direction by driving of the arm 4 by the machining tool or the multi-axis robot.

The protrusion portion 11 of the welding tool 1 is in the form of an elongated pin along the center of the main axis 20 and is often referred to as a welding tool pin portion. When welding the two members to be welded 101a and 101b, the welding tool 1 held by the tool holder 2 press-fits the protrusion portion 11 to the welding line 102, which is the boundary between the members to be welded 101a and 101b while rotating. At this time, the protrusion portion 11 is press-fitted up to a position where a portion (tool shoulder portion 12 in Fig. 3) of the bottom surface portion of the welding tool 1 main body excluding the protrusion portion 11 is in contact with the surfaces of the members to be welded 101a and 101b.

When the protrusion portion 11 is press-fitted, the temperature rises due to the friction heat when the protrusion portion 11 and the tool shoulder portion 12 rotate while being in contact with the members to be welded 101a and 101b and a plastic flow phenomenon is generated in the members to be welded 101a and 101b. Then, the constituent materials of the members to be welded 101a and 101b where the plastic flow phenomenon is generated are stirred and mixed by the welding tool 1. Further, the welding tool 1 is controlled so as to move along the welding line 102 in a state where the protrusion portion 11 is press-fitted into the members to be welded 101a and 101b. As a result, boundary portions of the members to be welded 101a and 101b are welded to each other.

The configuration and operation of the basic portion of the FSW apparatus 100 as described above are the same as those of the related art. As described above, in the related art, the temperature of the welded portion of the members to be welded 101a and 101b is not sufficiently managed. It is considered that the welding temperature may be a temperature at which the plastic flow phenomenon is generated in the members to be welded 101a and 101b. Therefore, since the inventors of the present invention measure the temperature when the welded portions of the members to be welded 101a and 101b were welded under the condition of a constant heat input amount, the results thereof are illustrated in the following Fig. 2.

Fig. 2 is a diagram illustrating an example of transition of the tool temperature when the members to be welded 101a and 101b are welded by the FSW apparatus 100 under the condition of the constant heat input amount. Here, the tool temperature means a temperature measured the temperature of the welded portion when the members to be welded 101a and 101b are frictionally stirred by the temperature sensor such as a thermocouple (see temperature sensor 13 in Fig. 3) embedded in the protrusion portion 11 of the welding tool 1. Therefore, although the tool temperature is not the temperature itself of the welded portion, the tool temperature is considered as temperature very close to the temperature of the welded portion compared with the temperature obtained by the temperature sensor provided in the backing member described in PTL 2 or the like.

As illustrated in Fig. 2, the tool temperature is such that the protrusion portion 11 of the welding tool 1 is in contact with the welding start point of the surfaces of the members to be welded 101a and 101b and is press-fitted thereinto, and hardly rises until time t₁ when the tool shoulder portion 12 (see Fig. 3) is in contact with the surfaces of the members to be welded 101a and 101b. Subsequently, when the tool shoulder portion 12 is in contact with the surfaces of the members to be welded 101a and 101b, the tool temperature rises due to the friction heat generated by the tool shoulder portion 12 being in contact with the surfaces of the members to be welded 101a and 101b while rotating. When the tool temperature exceeds the predetermined temperature T₁ at the time t₂, it is determined that the plastic flow phenomenon is generated in the members to be welded 101a and 101b, and the welding is started. Here, the time from the time t₁ to the time t₂ is a time to wait for the plastic flow phenomenon to be generated, which is called a hold time.

When welding is started, the protrusion portion 11 of the welding tool 1 starts moving along the welding line 102 in a state of being press-fitted to the members to be welded 101a and 101b, and moves to the welding end point. At this time, the tool temperature gradually rises until the welding tool 1 moves from the welding start point (time t₃) to the welding end point (time t₃). This is because the temperature of the welded portion after the welding tool 1 is moved is affected by heat conduction from the already raised welded portion before the welding tool 1 is moved. In other words, this is because the temperature of the welded portion is not determined, at this time, by only the amount of heat generated at the welded portion by the welding tool 1 after the welding tool 1 is moved but is determined by addition of an accumulated amount of heat conducted from the welded portion when the welding tool 1 is moved by this time.

When the welding is ended (time t₃), the protrusion portion 11 of the welding tool 1 is pulled out from the members to be welded 101a and 101b and the temperature of the welding tool 1 rapidly decreases.

As described above, as in the example illustrated in Fig. 2, in a case where the heat input amount is constant, it is found that the tool temperature increases by about 100°C from the welding start point to the welding end point. In this case, it is unlikely to keep the welding quality uniform on the welding line 102 of the members to be welded 101a and 101b. Therefore, in this embodiment, the FSW apparatus 100 manages the tool temperature so that the tool temperature falls within the range of the preset management temperature.

Fig. 3 is a diagram illustrating an example of a schematic block configuration of the FSW apparatus 100 according to the embodiment of the invention. Fig. 3 illustrates a schematic longitudinal sectional structure of the welding tool 1, the tool holder 2, and the housing 3, together with accompanying devices and members attached thereto.

As described above, the housing 3 is a cylindrical container, in which a columnar tool holder 2 is held via a bearing 31 to be capable of rotating about the center axis (main axis 20) of the column. At this time, the tool holder 2 is rotationally driven by a main axis motor 6 attached to the housing 3 side. In addition, a welding tool 1 is attached to a lower tip portion of the tool holder 2, and the welding tool 1 is rotationally driven by the main axis motor 6 together with the tool holder 2.

The welding tool 1 has a cylindrical shape which is coaxial with the tool holder 2, and an elongated substantially columnar (pin-shaped) protrusion portion 11 which is coaxial with the tool holder 2 is provided on a bottom surface portion thereof. In addition, a portion of the bottom surface portion of the welding tool 1 other than the portion where the protrusion portion 11 is provided is called as a tool shoulder portion 12. The protrusion portion 11 of the bottom surface portion of the welding tool is press-fitted to a position where the tool shoulder portion 12 is in contact with the surfaces of the members to be welded 101a and 101b. Therefore, the tool shoulder portion 12 plays a role of stopping the press-fitting of the protrusion portion 11. In addition, at this time, the tool shoulder portion 12 presses the surfaces of the members to be welded 101a and 101b and also rotates and slides on the surface thereof. Then, due to the friction heat of rotation and sliding of the tool shoulder portion 12, the vicinity portion of the tool shoulder portion 12 and the protrusion portion 11 in the members to be welded 101a and 101b are heated, and a plastic flow phenomenon appears.

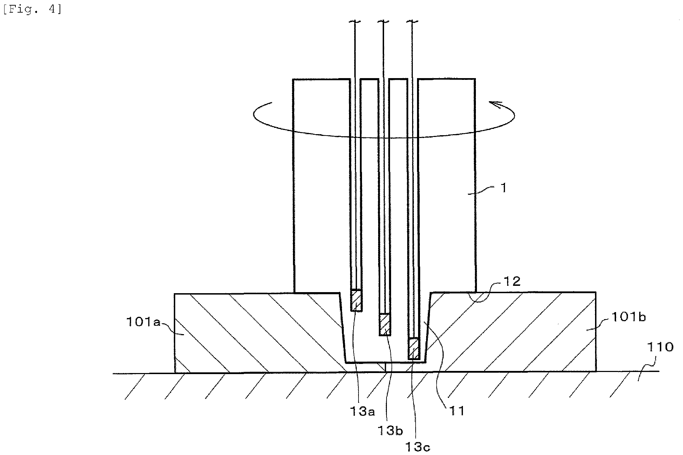

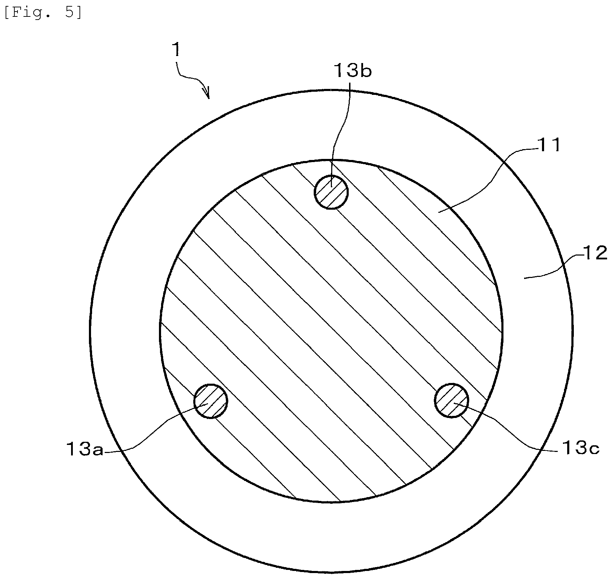

In this embodiment, a plurality of temperature sensors 13 (thermocouples or the like) are embedded in the protrusion portion 11 (three temperature sensors 13 are depicted in Fig. 3). The temperature sensors are embedded at positions in which positions in the longitudinal direction in the protrusion portion 11 are different from each other. This will be described in detail with reference to Figs. 4 and 5.

The temperature measured by the temperature sensor 13 is transmitted to the control device 5 via the transmitter 8 attached to the tool holder 2 and the receiver 9 attached to the housing 3. Since the transmitter 8 rotates together with the tool holder 2, the receiver 9 has, for example, a donut-shaped antenna surrounding the transmitter 8, and communicates with the transmitter 8 wirelessly.

The control device 5 acquires the tool temperature from the temperature measured by the temperature sensor 13. In this case, when a plurality of temperature sensors 13 are embedded in the protrusion portion 11, simple-averaging or weight-averaging a plurality of measured temperatures is taken as a tool temperature.

The control device 5 is configured by a general computer having an arithmetic processing device (not illustrated) and a storage device (not illustrated) and controls the main axis motor 6 and the tool movement driving device 7 based on the temperature measured by the temperature sensor 13, that is, the tool temperature. In such a case, when lowering the tool temperature, the rotation of the main axis motor 6 may be decelerated or the movement speed of the welding tool 1 may increase by the tool movement driving device 7. In addition, when raising the tool temperature, the rotation of the main axis motor 6 may be accelerated, or the movement speed of the welding tool 1 by the tool movement driving device 7 may decreases . The tool movement driving device 7 referred to here corresponds to a machining center type FSW apparatus or a multi-axis robot type FSW apparatus having the arm 4 to which the housing 3 is attached in Fig. 1.

Fig. 4 is an example of a longitudinal sectional view schematically illustrating a state where the protrusion portion 11 of the welding tool 1 is press-fitted into the members to be welded 101a and 101b and Fig. 5 is a view schematically illustrating a transverse cross section cross section of the welding tool 1. As illustrated in Fig. 4, in a case where two similar members to be welded 101a and 101b (for example, two aluminum alloy plates) are butt-welded against each other, the members to be welded 101a and 101b are disposed on the backing member 110 and the protrusion portion 11 of the welding tool 1 is press-fitted into the boundary portion while rotating.

At this time, the protrusion portion 11 is press-fitted up to a depth such that the tip portion of the protrusion portion 11 almost reaches the back surface side of the members to be welded 101a and 101b and the tool shoulder portion 12 is in contact with the surfaces of the members to be welded 101a and 101b. Therefore, in the welding tool 1, the diameter, the length, the shape, and the like of the protrusion portion 11 are usually determined according to the plate thickness and the material of the object to be welded. The backing member 110 needs to have high heat resistance and a hardness capable of withstanding a load in the tool axis direction.

Further, as illustrated in Fig. 4, in the protrusion portion 11, temperature sensors 13a, 13b, and 13c including a thermocouple or the like are embedded at a position where the depths are different from each other when the protrusion portion 11 is press-fitted into the members to be welded 101a and 101b. As illustrated in Fig. 5, these temperature sensors 13a, 13b, and 13c are embedded at positions where the distances from the outer peripheral surface of the protrusion portion 11 are substantially equal to each other and close to the outer peripheral surface thereof. In Fig. 5, the circle of the hatched portion on the inner side represents the outer peripheral surface of the protrusion portion 11, the outer circle represents the outer peripheral surface of the main body of the welding tool 1, and the portion interposed between these two circles represents the tool shoulder portion 12.

As described above, temperature distribution in the depth direction when the members to be welded 101a and 101b are welded can be more accurately acquired by the temperature sensors 13a, 13b, and 13c embedded in the protrusion portion 11.

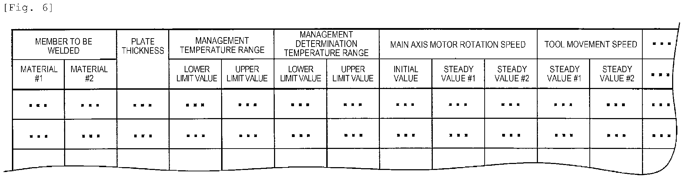

Fig. 6 is a diagram illustrating an example of a configuration of the FSW control data 501 stored in the storage device of the control device 5. As illustrated in Fig. 6, the FSW control data 501 is configured by the management temperature range, the management determination temperature range, the rotation speed of the main axis motor, the tool movement speed, and the like, which are associated with the materials and plate thicknesses of the members to be welded 101a and 101b.

Here, the management temperature range is a temperature for managing the tool temperature obtained from the temperature sensors 13a, 13b, and 13c, and includes an upper limit value and a lower limit value. When welding by the FSW apparatus 100 tool is performed, the tool temperature, that is, the temperature of the welded portion of the members to be welded 101a and 101b frictionally stirred by the welding tool 1 is managed so as to converge into the management temperature range.

In addition, the upper limit value and the lower limit value of the management determination temperature range are temperatures included in the management temperature range. In other words, the upper limit value of the management determination temperature range is lower than the upper limit value of the management temperature range, and the lower limit value of the management determination temperature range is set to a higher value than the lower limit value of the management temperature range.

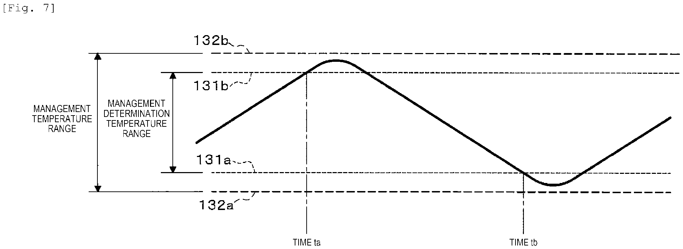

In general, in the temperature control of an object having a large heat capacity, even if the temperature of an object which is falling in temperature is detected and the heating amount is reduced, the temperature does not fall immediately but overshoots. Likewise, even if the temperature of an object which is falling in temperature is detected and the heating amount increases, the temperature does not immediately rise but undershoots. Therefore, in this embodiment, by setting the upper limit value and the lower limit value of the management determination temperature range, it is possible to allow overshoot and undershoot of temperature in temperature control. This will also be described in Fig. 7.

Further, in Fig. 6, an initial value of the rotation speed of the main axis motor is an initial value of the rotation speed of the main axis motor 6 when press-fitting the protrusion portion 11 of the welding tool 1 into the members to be welded 101a and 101b. In addition, a steady value #1, a steady value #2 of the main axis motor rotation speed, and a steady value #1 and a steady value #2 of the tool movement speed are data set the rotation speed of the main axis motor 6 and the movement speed of the welding tool 1 during welding performing and the data will be described in detail with reference to Fig. 7.

As described above, the upper limit value and the lower limit value of the management temperature range, the upper limit value and the lower limit value of the management determination temperature range, the initial value, the steady value #1, and the steady value #2 of the main axis motor rotation speed, the steady value #1, and the steady value #2, and the like of the tool movement speed constituting the FSW control data 501 are values obtained as adequate values in advance by experiments, simulations, or the like according to the material and plate thickness of the members to be welded 101a and 101b.

Fig. 7 is a diagram schematically illustrating an example of a method of temperature management when the members to be welded 101a and 101b are welded by the welding tool 1. In this embodiment, the protrusion portion 11 of the welding tool 1 is press-fitted into the members to be welded 101a and 101b, and the welding is started after the tool temperature falls within the management temperature range defined by the FSW control data 501. When welding is started, the welding tool 1 not only rotates, but also starts to move.

The tool temperature is usually in an upward phase at the time of the welding start. Therefore, the control device 5 outputs the steady-state value #1 of the main axis motor rotation speed and the steady value #1 of the tool movement speed of the FSW control data 501 stored in the storage device to the main axis motor 6 and the tool movement driving device 7, respectively. Accordingly, the welding tool 1 rotates and moves according to the output line speed and movement speed. The tool temperature is mainly determined by the main axis motor rotation speed and the tool movement speed, but the steady value #1 of the main axis motor rotation speed and the steady value #1 of the tool movement speed at this time are set so that the tool temperature is slightly raised.

Subsequently, the control device 5 determines whether or not the tool temperature exceeds the upper limit value 131b of the management determination temperature range specified by the FSW control data 501. Then, in a case where the tool temperature exceeds the upper limit value 131b of the management determination temperature range (time ta in Fig. 7), the control device 5 outputs the steady value #2 of the main axis motor rotation speed and the steady-state value #2 of the tool movement speed of the FSW control data 501 to the main axis motor 6 and the tool movement driving device 7, respectively. The steady value #2 of the main axis motor rotation speed and the steady value #2 of the tool movement speed at this time has such a value that the tool temperature decreases slightly.

Through these controls, although the tool temperature slightly exceeds (overshoots) the upper limit value 131b of the management determination temperature range, the tool temperature turns into a phase of falling before reaching the upper limit value 132b of the management temperature range.

Subsequently, the control device 5 determines whether or not the tool temperature is under the lower limit value 131a of the management determination temperature range specified by the FSW control data 501. Then, in a case where the tool temperature is under the lower limit value 131a of the management determination temperature range (time tb in Fig. 7), the control device 5 outputs the steady value #1 of the main axis motor rotation speed and the steady value #1 of the tool movement speed of the FSW control data 501 to the main axis motor 6 and the tool movement driving device 7, respectively.

Through these controls, although the tool temperature slightly is under the lower limit value 131a of the management determination temperature range (undershoot), the tool temperature turns into a phase of rising again before reaching the lower limit value 132a of the management temperature range.

As described above, in this embodiment, although the tool temperature repeats the rising and falling phases as illustrated in Fig. 7, the tool temperature is interposed between the lower limit value 132a and the upper limit value 132b of the management temperature range.

In Fig. 7, it is preferable that a change rate (inclination) of the temperature in the phase where the tool temperature rises is almost the same as that obtained by inverting the sign of a change rate (inclination) of the temperature in the phase where the tool temperature falls. By doing so, since a state of being frictionally stirred in the members to be welded 101a and 101b does not change greatly, it is possible to make the welding quality uniform.

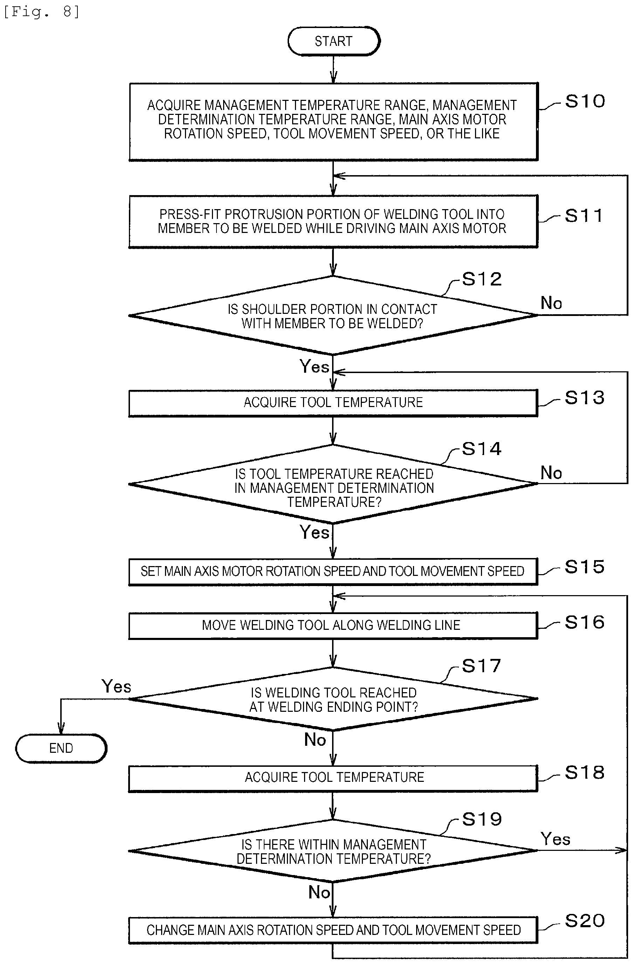

Fig. 8 is a diagram illustrating an example of a processing flow of the FWS welding control processing by the control device 5. As illustrated in Fig. 8, from the FSW control data 501 stored in the storage device, the control device 5 first acquires data such as the management temperature range, the management determination temperature range, the main axis motor rotation speed, the tool movement speed, or the like corresponding to the material and plate thickness of the members to be welded 101a and 101b. (step S10).

Next, while driving the main axis motor 6, the control device 5 press-fits the protrusion portion 11 of the welding tool 1 into the members to be welded 101a and 101b (step S11), and determines whether or not the tool shoulder portion 12 is in contact with the member to be welded 101a and 101b (step S12). Here, in a case where the tool shoulder portion 12 is not in contact with the members to be welded 101a and 101b (No in Step S12) and the control of Step S11 is continued. In a case where the tool shoulder portion 12 is in contact with the members to be welded 101a and 101b (Yes in step S12), press-fitting of the protrusion portion 11 is stopped and the control device 5 acquires the tool temperature based on the temperature measured by the temperature sensors 13a, 13b, and 13c (step S13).

Next, the control device 5 determines whether or not the tool temperature is reached in the management determination temperature range acquired in step S10 (step S14). Here, in a case where the tool temperature is not reached in the management determination temperature range (No in step S14), the processing in step S13 and the subsequent steps is executed again. In addition, in a case where the tool temperature reaches the management determination temperature range, the control device 5 sets a main axis motor rotation speed (steady value #1) and the tool movement speed (steady value #1) with respect to the main axis motor 6 and the tool movement driving device 7, respectively (step S15).

Subsequently, the control device 5 drives the tool movement driving device 7 to move the welding tool 1 along the predetermined welding line 102 (see Fig. 1) to the tool movement speed set at this time (Step S16). Further, the control device 5 determines whether or not the position of the welding tool 1 is reached at the welding end point (step S17). Here, in a case where the position of the welding tool 1 is not yet reached at the welding end point (No in step S17), the control device 5 acquires the tool temperature based on the temperature measured by the temperature sensors 13a, 13b, and 13c (step S18), and further determines whether or not the acquired tool temperature is within the management determination temperature range (step S19).

As a result of the determination in step S19, in a case where the tool temperature is within the management determination temperature range (Yes in step S19), the control device 5 repeatedly executes the processing in step S16 and subsequent steps. In addition, in a case where the tool temperature is out of the management determination temperature range (No in step S19), the control device 5 changes the main axis motor rotation speed and the tool movement speed set in the main axis motor 6 and the tool movement driving device 7, respectively (step S20). Then, the control device 5 repeatedly executes the processing in step S16 and subsequent steps. In step S20, the steady value #1 is changed to the steady value #2 if the main axis motor rotation speed and the tool movement speed set at this time are the steady value #1 and the steady value #2 is changed the steady value #1 if the main axis motor rotation speed and the tool movement speed set at this time are the steady value #2.

In addition, in a case where the position of the welding tool 1 is reached at the welding end point as a result of the determination in step S17 (Yes in step S17), the control device 5 ends the FWS welding control process.

As described above, according to the embodiment of the invention, the fluctuation of the tool temperature, that is, the temperature fluctuation at the time of welding the welding target portions of the members to be welded 101a and 101b can be interposed within the predetermined management temperature range. Accordingly, since it is possible to suppress temperature fluctuation at the time of welding over the entire portion along the welding line 102 to be welded of the members to be welded 101a and 101b, the welding quality can be improved.

In addition, according to the embodiment of the invention, in the FWS welding control processing illustrated in Fig. 8, the tool temperature can be controlled only by controlling the main axis motor rotation speed and the tool movement speed. In other words, in this embodiment, the machining center type FSW apparatus and the multi-axis robot type FSW apparatus corresponding to the tool movement driving device 7 is only necessary to move the welding tool 1 at the tool movement speed instructed by the control device 5. In this case, it is not necessary to particularly manage the torque received by the main axis motor 6 and the reaction force received from the members to be welded 101a and 101b. Therefore, in this embodiment, it is possible to obtain the effect of simplifying the control processing in the tool movement driving device 7, that is, the machining device and the multi-axis robot.

### (Modification example of embodiment)

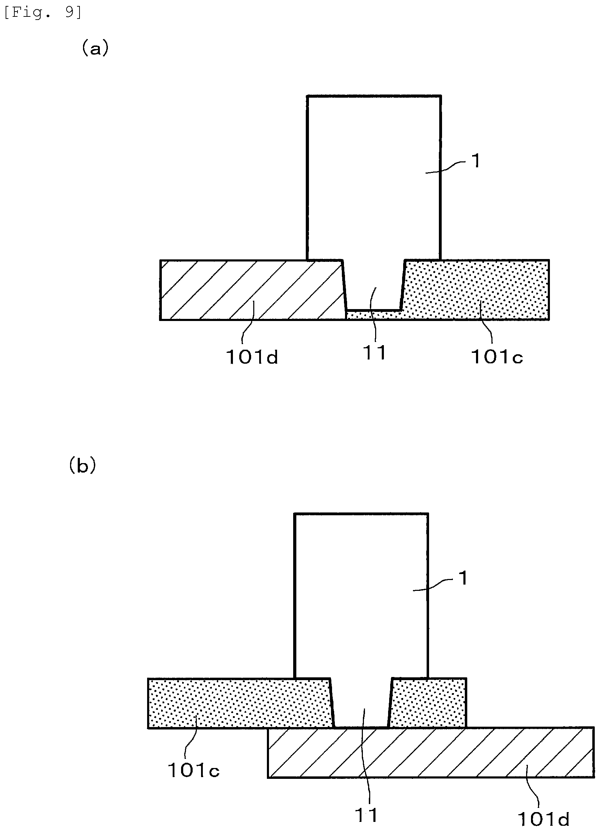

In the embodiments so far, the butt welding of members to be welded 101a and 101b made of the similar material is described. Hereinafter, as a modification example of the embodiment, an example of butt welding and overlay welding of members to be welded 101c and 101d made of dissimilar materials will be supplementally described. Fig. 9 is a view illustrating an example of (a) an example of butt welding and (b) an example of overlay welding of members to be welded 101c and 101d made of dissimilar materials.

As illustrated in Fig. 9 (a), in a case where the members to be welded 101c and 101d made of dissimilar materials are butt-welded, the outer peripheral portion of the protrusion portion 11 of the welding tool 1 is in contact with the boundary of the members to be welded and the whole of the protrusion portion 11 of the welding tool 1 is press-fitted into a position included in a side of the member to be welded 101c made of a material that softens at a low temperature. For example, in a case where the material of the member to be welded 101c is an aluminum-based alloy and the member to be welded 101d is an iron-based alloy, the protrusion portion 11 of the welding tool 1 is press-fitted into a position included in the side of the member 101c to be welded which is an aluminum-based alloy.

In addition, in this case, values such as the management temperature range and the management determination temperature for tool temperature management, and the main axis motor rotation speed and the tool movement speed at the time of welding are determined based on physical properties (for example, temperature, thermal conductivity, specific heat, or the like at which plastic flow phenomenon is generated) of the material (material which softens at low temperature: for example, aluminum alloy) of the member to be welded 101c into which the protrusion portion 11 is press-fitted. These values are determined by prior experiments, simulations, or the like and are stored in the storage device of the control device 5 as the FSW control data 501.

In a case of welding the members to be welded 101c and 101d made of dissimilar materials, although a plastic flow phenomenon is generated on the side of the member to be welded 101c (for example, aluminum-based alloy) softened at a low temperature, plastic flow phenomenon is not necessarily generated on the side of the member to be welded 101d (for example, iron-based alloy) . However, in such a case, the metal atoms on the side of the member 101c to be welded are mainly diffused toward the member 101d to be welded and a eutectic is formed at the boundary portion between the members to be welded 101c and 101d so that the members to be welded are welded to together.

In addition, as illustrated in Fig. 9(b), in a case where members to be welded 101c and 101d made of dissimilar materials are overlay-welded, the protrusion portion 11 of the welding tool 1 is press-fitted from the side of the member to be welded 101c made of a material which softens at a low temperature to a position where the tip of the protrusion portion 11 of the welding tool 1 is in contact with the member to be welded 101d. Also in this case, the management temperature range and the management determination temperature for the tool temperature management, and the main axis motor rotation speed, and the tool movement speed at the time of welding, and the like are determined by physical properties (for example, temperature, thermal conductivity, specific heat, or the like at which plastic flow phenomenon is generated) of the material on the side of the member to be welded 101c into which the protrusion portion 11 is press-fitted.

In addition, in Fig. 9(b), the members to be welded 101c and 101d may be the similar material. In this case, however, it is preferable that the protrusion portion 11 of the welding tool 1 be press-fitted up to in the middle of the lower member to be welded 101d beyond the boundary between the members to be welded. By doing so, since a friction stir area is formed at the boundary between the both members, the members are firmly welded.

Also in the modification example of the embodiment described above, the tool temperature management method can be performed substantially in the same manner as the method described with reference to Figs. 7 and 8. Therefore, also in the modification example of the embodiment, it is possible to obtain the same effects described above as those of the embodiment described above.

In addition, although the embodiment and modification examples thereof described above are examples in a case where the welding tool 1 is moved and continuously welded, the invention can be applied to a spot welding in which position thereof does not move while the welding tool 1 is inserted in a predetermined position. In this case, the tool temperature of the welding tool 1 which does not move is managed during the period from the welding start point to the welding end point.

The present invention is not limited to the embodiments and modification examples described above and, further includes various modification examples. For example, the embodiments and modification examples described above are described in detail in order to explain the invention in an easy-to-understand manner and are not necessarily limited to those having all the configurations described. In addition, it is possible to replace a portion of the configuration of a certain embodiment and a modification example with the configuration of another embodiment and a modification example, and in addition, it is also possible to add the configuration of the other embodiment and the modification example to the configuration of a certain embodiment and a modification example. In addition, it is also possible to add, delete, or replace configurations included in other embodiments and modifications with respect to some of the configurations of each embodiment and modification.

### Reference Signs List

- 1: welding tool
- 2: tool holder
- 3: housing
- 4: arm
- 5: control device
- 6: main axis motor (tool rotation driving device)
- 7: tool movement driving device
- 8: transmitter
- 9: receiver
- 11: protrusion portion
- 12: tool shoulder portion (pressing portion)
- 13, 13a, 13b, 13c: temperature sensor
- 20: main axis
- 31: bearing
- 100: FSW apparatus (friction stir welding apparatus)
- 101a, 101b, 101c, 101d: member to be welded
- 110: backing member

## Claims

1. A friction stir welding apparatus (100) comprising:
a welding tool (1) that has a protrusion portion (11) which is adapted to be press-fitted into members to be welded (101) while rotating and a pressing portion (12) which is adapted to press a surface of the members to be welded (101) while rotating the protrusion portion (11) and cause a plastic flow phenomenon to be generated in a vicinity region where the protrusion portion (11) and the pressing portion (12) are in contact with the members to be welded (101);
a tool rotation driving device (6) that is adapted to rotate the welding tool (1);
a tool movement driving device (7) that is adapted to move the welding tool (1) along a preset welding line (102) on the members to be welded (101);
**characterized by**
a plurality of temperature sensors (13) that are provided at inner positions of the protrusion portion (11) having different depths from the surface of the members to be welded (101), respectively, when the protrusion portion (11) of the welding tool (1) is press-fitted into the members to be welded (101); and
a control device (5) that is adapted to acquire the tool temperature which is a temperature in the protrusion portion (11) of the welding tool (1) based on the temperature detected by the plurality of temperature sensors (13) and control at least one of a rotation speed of the welding tool (1) driven by the tool rotation driving device (6) and a movement speed of the welding tool (1) driven by the tool movement driving device (7) so that the tool temperature converges into a predetermined management temperature range.

2. The friction stir welding apparatus (100) according to claim 1,
wherein the control device (5) includes a storage device that is adapted to store a management determination temperature lower limit value and a management determination temperature upper limit value that are temperatures within the management temperature range, and
wherein the control device (5) has
a function that is adapted to control at least one of a control of accelerating the rotation speed of the welding tool (1) and a control of decelerating the movement speed of the welding tool (1) so that, when the tool temperature exceeds the management determination temperature upper limit value, inclination of temperature falling of the welding tool (1) thereafter becomes substantially the same as an inclination obtained by sign inversion of the inclination of temperature rising thereof up to this time, and
a function that is adapted to control at least one of a control of decelerating the rotation speed of the welding tool (1) and a control of accelerating the movement speed of the welding tool (1) so that, when the tool temperature is under the management determination temperature lower limit value, the inclination of the temperature rising of the welding tool (1) thereafter becomes substantially the same as an inclination obtained by sign inversion of the inclination of the temperature falling thereof up to this time.

3. The friction stir welding apparatus (100) according to claim 1, wherein the control device (5) is adapted to acquire a temperature obtained by performing simple-averaging or weight-averaging temperatures detected by each of the plurality of temperature sensors (13) as the tool temperature.

4. The friction stir welding apparatus (100) according to claim 1, wherein, in a case where the two members to be welded (101) which are welded are made of dissimilar materials, the control device (5) is adapted to set the management temperature range and the management determination temperature based on physical properties of the members to be welded (101) which has a lower softening temperature among the two members to be welded (101) and control the movement of the welding tool (1) in a state where the protrusion portion (11) is press-fitted into the members to be welded (101) having the lower softening temperature.

5. A friction stir welding control method which is performed by a friction stir welding apparatus (100) which includes
a welding tool (1) that has a protrusion portion (11) which is press-fitted into members to be welded (101) while rotating and a pressing portion (12) which presses a surface of the members to be welded (101) while rotating the protrusion portion (11) and causes a plastic flow phenomenon to be generated in a vicinity region where the protrusion portion (11) and the pressing portion (12) are in contact with the members to be welded (101),
a plurality of temperature sensors (13) that are provided at inner positions of the protrusion portion (11) having different depths from the surface of the members to be welded (101), respectively, when the protrusion portion (11) of the welding tool (1) is press-fitted into the members to be welded (101),
a tool rotation driving device (6) that rotates the welding tool (1),
a tool movement driving device (7) that moves the welding tool (1) along a preset welding line (102) on the members to be welded (101), and
a control device (5) that controls the tool rotation driving device (6) and the tool movement driving device (7), the method comprising:
acquiring a temperature obtained by performing simple-averaging or weight-averaging temperatures detected by each of the plurality of temperature sensors (13) as the tool temperature which is a temperature in the protrusion portion (11) of the welding tool (1); and
controlling at least one of a rotation speed of the welding tool (1) driven by the tool rotation driving device (6) and a movement speed of the welding tool (1) driven by the tool movement driving device (7) so that the tool temperature converges into a predetermined management temperature range.

6. The friction stir welding control method according to claim 5,
wherein the control device (5) includes a storage device that stores a management determination temperature lower limit value and a management determination temperature upper limit value that are temperatures within the management temperature range, and
wherein the control device (5)
controls at least one of a control of accelerating the rotation speed of the welding tool (1) and a control of decelerating the movement speed of the welding tool (1) so that, when the tool temperature exceeds the management determination temperature upper limit value, inclination of temperature falling of the welding tool (1) thereafter becomes substantially the same as an inclination obtained by sign inversion of the inclination of temperature rising thereof up to this time, and
controls at least one of a control of decelerating the rotation speed of the welding tool (1) and a control of accelerating the movement speed of the welding tool (1) so that, when the tool temperature is under the management determination temperature lower limit value, the inclination of the temperature rising of the welding tool (1) thereafter becomes substantially the same as an inclination obtained by sign inversion of the inclination of the temperature falling thereof up to this time.

7. The friction stir welding control method according to claim 5, wherein, in a case where the two members to be welded (101) which are welded are made of dissimilar materials, the control device (5) sets the management temperature range and the management determination temperature based on physical properties of the members to be welded (101) which has a lower softening temperature among the two members to be welded (101) and controls the movement of the welding tool (1) in a state where the protrusion portion (11) is press-fitted into the members to be welded (101) having the lower softening temperature.

## Patentansprüche

1. Reibrührschweißgerät (100) mit
einem Schweißwerkzeug (1), das einen Vorsprungsabschnitt (11), der dazu ausgelegt ist, in zu verschweißende Elemente (101) unter Rotation eingepresst zu werden, und einen Andrückabschnitt (12) aufweist, der dazu ausgelegt ist, unter Rotation des Vorsprungsabschnitts (11) eine Fläche der zu verschweißenden Elemente (101) anzudrücken und ein plastisches Fließphänomen zu verursachen, das in einer Nachbarregion zu erzeugen ist, in der der Vorsprungsabschnitt (11) und der Andrückabschnitt (12) in Kontakt mit den zu verschweißenden Elementen (101) stehen,
einer Werkzeugrotationsantriebsvorrichtung (6), die dazu ausgelegt ist, das Schweißwerkzeug (1) zu rotieren,
einer Werkzeugbewegungsantriebsvorrichtung (7), die dazu ausgelegt ist, das Schweißwerkzeug (1) längs einer voreingestellten Schweißlinie (102) auf den zu verschweißenden Elementen (101) zu bewegen,
**gekennzeichnet durch**
mehrere Temperatursensoren (13), die an Innenpositionen des Vorsprungsabschnitts (11) vorgesehen sind, die jeweils verschiedene Tiefen von der Fläche der zu verschweißenden Elemente (101) aufweisen, wenn der Vorsprungsabschnitt (11) des Schweißwerkzeugs (1) in die zu verschweißenden Elemente (101) eingepresst wird, und
eine Steuervorrichtung (5), die dazu ausgelegt ist, die Werkzeugtemperatur zu erhalten, die eine Temperatur in dem Vorsprungsabschnitt (11) des Schweißwerkzeugs (1) basierend auf der durch die mehreren Temperatursensoren (13) erfassten Temperatur ist, und eine Rotationsgeschwindigkeit des durch die Werkzeugrotationsantriebsvorrichtung (6) angetriebenen Schweißwerkzeugs (1) und/oder eine Bewegungsgeschwindigkeit des durch die Werkzeugbewegungsantriebsvorrichtung (7) angetriebenen Schweißwerkzeugs (1) so zu steuern, dass die Werkzeugtemperatur innerhalb eines vorbestimmten Verwaltungstemperaturbereichs konvergiert.

2. Reibrührschweißgerät (100) nach Anspruch 1,
wobei die Steuervorrichtung (5) eine Speichervorrichtung aufweist, die dazu ausgelegt ist, einen unteren Grenzwert einer Verwaltungsbestimmungstemperatur und einen oberen Grenzwert einer Verwaltungsbestimmungstemperatur zu speichern, die Temperaturen innerhalb des Verwaltungstemperaturbereichs darstellen, und
wobei die Steuervorrichtung (5) aufweist:
eine Funktion, die dazu ausgelegt ist, eine Steuerung der Beschleunigung der Rotationsgeschwindigkeit des Schweißwerkzeugs (1) und/oder eine Steuerung der Verlangsamung der Bewegungsgeschwindigkeit des Schweißwerkzeugs (1) so zu steuern, dass, wenn die Werkzeugtemperatur den oberen Grenzwert der Verwaltungsbestimmungstemperatur überschreitet, die Steigung des Temperaturabfalls des Schweißwerkzeugs (1) danach im Wesentlichen genauso groß ist wie eine Steigung, die durch Vorzeichenumkehrung der Steigung des Temperaturanstiegs davon zu dieser Zeit ist, und
eine Funktion, die dazu ausgelegt ist, eine Steuerung der Verlangsamung der Rotationsgeschwindigkeit des Schweißwerkzeugs (1) und/oder eine Steuerung der Beschleunigung der Bewegungsgeschwindigkeit des Schweißwerkzeugs (1) so zu steuern, dass, wenn die Werkzeugtemperatur unter dem unteren Grenzwert der Verwaltungsbestimmungstemperatur ist, die Steigung des Temperaturanstiegs des Schweißwerkzeugs (1) danach im Wesentlichen genauso groß ist wie eine Steigung, die durch Vorzeichenumkehrung der Steigung des Temperaturabfalls davon zu dieser Zeit ist.

3. Reibrührschweißgerät (100) nach Anspruch 1, wobei die Steuervorrichtung (5) dazu ausgelegt ist, eine Temperatur als die Werkzeugtemperatur zu erhalten, die sich bei Durchführung einer einfachen Mittelung oder einer Gewichtsmittelung von Temperaturen ergibt, die durch jede der mehreren Temperatursensoren (13) erhalten werden.

4. Reibrührschweißgerät (100) nach Anspruch 1, wobei in einem Fall, in dem die zwei zu verschweißenden Elemente (101), die verschweißt werden, aus verschiedenen Materialien hergestellt sind, die Steuervorrichtung (5) dazu ausgelegt ist, den Verwaltungstemperaturbereich und die Verwaltungsbestimmungstemperatur basierend auf physikalischen Eigenschaften des zu verschweißenden Elements (101) einzustellen, das eine niedrigere Erweichungstemperatur von den zwei zu verschweißenden Elementen (101) aufweist, und die Bewegung des Schweißwerkzeugs (1) in einem Zustand zu steuern, in dem der Vorsprungsabschnitt (11) in das zu verschweißende Element (101) mit der niedrigeren Erweichungstemperatur eingepresst wird.

5. Reibrührschweißsteuerverfahren, das durch ein Reibrührschweißgerät (100) durchgeführt wird, das aufweist:
ein Schweißwerkzeug (1), das einen Vorsprungsabschnitt (11), der in zu verschweißende Elemente (101) unter Rotation eingepresst wird, und einen Andrückabschnitt (12) aufweist, der unter Rotation des Vorsprungsabschnitts (11) eine Fläche der zu verschweißenden Elemente (101) andrückt und ein plastisches Fließphänomen verursacht, das in einer Nachbarregion zu erzeugen ist, in der der Vorsprungsabschnitt (11) und der Andrückabschnitt (12) in Kontakt mit den zu verschweißenden Elementen (101) stehen,
mehrere Temperatursensoren (13), die an Innenpositionen des Vorsprungsabschnitts (11) vorgesehen sind, die jeweils verschiedene Tiefen von der Fläche der zu verschweißenden Elemente (101) aufweisen, wenn der Vorsprungsabschnitt (11) des Schweißwerkzeugs (1) in die zu verschweißenden Elemente (101) eingepresst wird,
eine Werkzeugrotationsantriebsvorrichtung (6), die das Schweißwerkzeug (1) rotiert,
eine Werkzeugbewegungsantriebsvorrichtung (7), die das Schweißwerkzeug (1) längs einer voreingestellten Schweißlinie (102) auf den zu verschweißenden Elementen (101) bewegt, und
eine Steuervorrichtung (5), die die Werkzeugrotationsantriebsvorrichtung (6) und die Werkzeugbewegungsantriebsvorrichtung (7) steuert, wobei in dem Verfahren:
eine Temperatur als die Werkzeugtemperatur erhalten wird, die eine Temperatur in dem Vorsprungsabschnitt (11) des Schweißwerkzeugs (1) ist, indem eine einfache Mittelung oder eine Gewichtsmittelung von Temperaturen durchgeführt wird, die durch jede der mehreren Temperatursensoren (13) erfasst wurden, und
eine Rotationsgeschwindigkeit des durch die Werkzeugrotationsantriebsvorrichtung (6) angetriebenen Schweißwerkzeugs (1) und/oder eine Bewegungsgeschwindigkeit des durch die Werkzeugbewegungsantriebsvorrichtung (7) angetriebenen Schweißwerkzeugs (1) so gesteuert werden, dass die Werkzeugtemperatur innerhalb eines vorbestimmten Verwaltungstemperaturbereichs konvergiert.

6. Reibrührschweißsteuerverfahren nach Anspruch 5,
wobei die Steuervorrichtung (5) eine Speichervorrichtung aufweist, die einen unteren Grenzwert einer Verwaltungsbestimmungstemperatur und einen oberen Grenzwert einer Verwaltungsbestimmungstemperatur speichert, die Temperaturen innerhalb des Verwaltungstemperaturbereichs darstellen, und
wobei die Steuervorrichtung (5)
eine Steuerung der Beschleunigung der Rotationsgeschwindigkeit des Schweißwerkzeugs (1) und/oder eine Steuerung der Verlangsamung der Bewegungsgeschwindigkeit des Schweißwerkzeugs (1) so steuert, dass, wenn die Werkzeugtemperatur den oberen Grenzwert der Verwaltungsbestimmungstemperatur überschreitet, die Steigung des Temperaturabfalls des Schweißwerkzeugs (1) danach im Wesentlichen genauso groß ist wie eine Steigung, die durch Vorzeichenumkehrung der Steigung des Temperaturanstiegs davon zu dieser Zeit ist, und
eine Steuerung der Verlangsamung der Rotationsgeschwindigkeit des Schweißwerkzeugs (1) und/oder eine Steuerung der Beschleunigung der Bewegungsgeschwindigkeit des Schweißwerkzeugs (1) so steuert, dass, wenn die Werkzeugtemperatur unter dem unteren Grenzwert der Verwaltungsbestimmungstemperatur ist, die Steigung des Temperaturanstiegs des Schweißwerkzeugs (1) danach im Wesentlichen genauso groß ist wie eine Steigung, die durch Vorzeichenumkehrung der Steigung des Temperaturabfalls davon zu dieser Zeit ist.

7. Reibrührschweißsteuerverfahren nach Anspruch 5, wobei in einem Fall, in dem die zwei zu verschweißenden Elemente (101), die verschweißt werden, aus verschiedenen Materialien hergestellt sind, die Steuervorrichtung (5) den Verwaltungstemperaturbereich und die Verwaltungsbestimmungstemperatur basierend auf physikalischen Eigenschaften des zu verschweißenden Elements (101) einstellt, das eine niedrigere Erweichungstemperatur von den zwei zu verschweißenden Elementen (101) aufweist, und die Bewegung des Schweißwerkzeugs (1) in einem Zustand steuert, in dem der Vorsprungsabschnitt (11) in das zu verschweißende Element (101) mit der niedrigeren Erweichungstemperatur eingepresst wird.

## Revendications

1. Appareil (100) de soudage par friction-malaxage comprenant :
un outil de soudage (1) qui a une partie faisant saillie (11) qui est adaptée à être ajustée par pression dans des éléments devant être soudés (101) tout en tournant et une partie de pression (12) qui est adaptée à presser une surface des éléments devant être soudés (101) tout en faisant tourner la partie faisant saillie (11) et à faire en sorte qu'un phénomène d'écoulement plastique soit généré dans une région proche où la partie faisant saillie (11) et la partie de pression (12) sont en contact avec les éléments devant être soudés (101) ;
un dispositif (6) d'entraînement de rotation d'outil qui est adapté à faire tourner l'outil de soudage (1) ;
un dispositif (7) d'entraînement de mouvement d'outil qui est adapté à déplacer l'outil de soudage (1) le long d'une ligne de soudage (102) prédéfinie sur les éléments devant être soudés (101) ;
**caractérisé par**
une pluralité de capteurs de température (13) qui sont prévus en des positions intérieures de la partie faisant saillie (11) ayant différentes profondeurs depuis la surface des éléments devant être soudés (101), respectivement, lorsque la partie faisant saillie (11) de l'outil de soudage (1) est ajustée par pression dans les éléments devant être soudés (101) ; et
un dispositif (5) de commande qui est adapté à acquérir la température d'outil qui est une température dans la partie faisant saillie (11) de l'outil de soudage (1) sur la base de la température détectée par la pluralité de capteurs de température (13) et commander au moins une parmi une vitesse de rotation de l'outil de soudage (1) entraîné par le dispositif (6) d'entraînement de rotation d'outil et une vitesse de mouvement de l'outil de soudage (1) entraîné par le dispositif (7) d'entraînement de mouvement d'outil de façon à ce que la température d'outil converge dans une plage prédéterminée de températures de maîtrise.

2. Appareil (100) de soudage par friction-malaxage selon la revendication 1,
dans lequel le dispositif (5) de commande inclut un dispositif de stockage qui est adapté à stocker une valeur limite inférieure de température de détermination de maîtrise et une valeur limite supérieure de température de détermination de maîtrise qui sont des températures à l'intérieur de la plage de températures de maîtrise, et
dans lequel le dispositif (5) de commande a
une fonction qui est adaptée à commander au moins une parmi une commande d'accélération de la vitesse de rotation de l'outil de soudage (1) et une commande de décélération de la vitesse de mouvement de l'outil de soudage (1) de façon à ce que, lorsque la température d'outil excède la valeur limite supérieure de température de détermination de maîtrise, une pente de chute de température de l'outil de soudage (1) devienne ensuite sensiblement la même qu'une pente obtenue par inversion de signe de la pente d'augmentation de température de celui-ci jusqu'à cet instant, et
une fonction qui est adaptée à commander au moins une parmi une commande de décélération de la vitesse de rotation de l'outil de soudage (1) et une commande d'accélération de la vitesse de mouvement de l'outil de soudage (1) de façon à ce que, lorsque la température d'outil est en-dessous de la valeur limite inférieure de température de détermination de maîtrise, la pente de l'augmentation de température de l'outil de soudage (1) devienne ensuite sensiblement la même qu'une pente obtenue par inversion de signe de la pente de la chute de température jusqu'à cet instant.

3. Appareil (100) de soudage par friction-malaxage selon la revendication 1, dans lequel le dispositif (5) de commande est adapté à acquérir une température obtenue en effectuant une moyenne simple ou une moyenne pondérée de températures détectées par chacun de la pluralité de capteurs de température (13) comme la température d'outil.

4. Appareil (100) de soudage par friction-malaxage selon la revendication 1, dans lequel, dans un cas où les deux éléments devant être soudés (101) qui sont soudés sont constitués de matériaux dissemblables, le dispositif (5) de commande est adapté à fixer la plage de températures de maîtrise et la température de détermination de maîtrise sur la base de propriétés physiques des éléments devant être soudés (101) qui a une température de ramollissement inférieure parmi les deux éléments devant être soudés (101) et commander le mouvement de l'outil de soudage (1) dans un état où la partie faisant saillie (11) est ajustée par pression dans les éléments devant être soudés (101) ayant la température de ramollissement inférieure.

5. Procédé de commande de soudage par friction-malaxage qui est mis en œuvre par un appareil (100) de soudage par friction-malaxage qui inclut
un outil de soudage (1) qui a une partie faisant saillie (11) qui est ajustée par pression dans des éléments devant être soudés (101) tout en tournant et une partie de pression (12) qui presse une surface des éléments devant être soudés (101) tout en faisant tourner la partie faisant saillie (11) et fait en sorte qu'un phénomène d'écoulement plastique est généré dans une région proche où la partie faisant saillie (11) et la partie de pression (12) sont en contact avec les éléments devant être soudés (101),
une pluralité de capteurs de température (13) qui sont prévus en des positions intérieures de la partie faisant saillie (11) ayant différentes profondeurs depuis la surface des éléments devant être soudés (101), respectivement, lorsque la partie faisant saillie (11) de l'outil de soudage (1) est ajustée par pression dans les éléments devant être soudés (101),
un dispositif (6) d'entraînement de rotation d'outil qui fait tourner l'outil de soudage (1),
un dispositif (7) d'entraînement de mouvement d'outil qui déplace l'outil de soudage (1) le long d'une ligne de soudage (102) prédéfinie sur les éléments devant être soudés (101), et
un dispositif (5) de commande qui commande le dispositif (6) d'entraînement de rotation d'outil et le dispositif (7) d'entraînement de mouvement d'outil, le procédé comprenant :
l'acquisition d'une température obtenue en effectuant une moyenne simple ou une moyenne pondérée de températures détectées par chacun de la pluralité de capteurs de température (13) comme la température d'outil qui est une température dans la partie faisant saillie (11) de l'outil de soudage (1) ; et
la commande d'au moins une parmi une vitesse de rotation de l'outil de soudage (1) entraîné par le dispositif (6) d'entraînement de rotation d'outil et une vitesse de mouvement de l'outil de soudage (1) entraîné par le dispositif (7) d'entraînement de mouvement d'outil de façon à ce que la température d'outil converge dans une plage prédéterminée de températures de maîtrise.

6. Procédé de commande de soudage par friction-malaxage selon la revendication 5,
dans lequel le dispositif (5) de commande inclut un dispositif de stockage qui est adapté à stocker une valeur limite inférieure de température de détermination de maîtrise et une valeur limite supérieure de température de détermination de maîtrise qui sont des températures à l'intérieur de la plage de températures de maîtrise, et
dans lequel le dispositif (5) de commande
commande au moins une parmi une commande d'accélération de la vitesse de rotation de l'outil de soudage (1) et une commande de décélération de la vitesse de mouvement de l'outil de soudage (1) de façon à ce que, lorsque la température d'outil excède la valeur limite supérieure de température de détermination de maîtrise, une pente de chute de température de l'outil de soudage (1) devienne ensuite sensiblement la même qu'une pente obtenue par inversion de signe de la pente d'augmentation de température de celui-ci jusqu'à cet instant, et
commande au moins une parmi une commande de décélération de la vitesse de rotation de l'outil de soudage (1) et une commande d'accélération de la vitesse de mouvement de l'outil de soudage (1) de façon à ce que, lorsque la température d'outil est en-dessous de la valeur limite inférieure de température de détermination de maîtrise, la pente de l'augmentation de température de l'outil de soudage (1) devienne ensuite sensiblement la même qu'une pente obtenue par inversion de signe de la pente de la chute de température jusqu'à cet instant.

7. Procédé de commande de soudage par friction-malaxage selon la revendication 5, dans lequel, dans un cas où les deux éléments devant être soudés (101) qui sont soudés sont constitués de matériaux dissemblables, le dispositif (5) de commande fixe la plage de températures de maîtrise et la température de détermination de maîtrise sur la base de propriétés physiques des éléments devant être soudés (101) qui a une température de ramollissement inférieure parmi les deux éléments devant être soudés (101) et commande le mouvement de l'outil de soudage (1) dans un état où la partie faisant saillie (11) est ajustée par pression dans les éléments devant être soudés (101) ayant la température de ramollissement inférieure.
